# EUROPEAN PATENT APPLICATION

(11) **EP 1 648 079 A2**
(43) Date of publication of application: **19.04.2006**
(21) Application number: 05022355.1
(22) Date of filing: 13.10.2005
(51) Int. Cl.: H02K 49/10

(54) **System for transmitting motion between means separated by a wall**

(30) Priority: 14.10.2004 IT BO20040629
(71) Applicant: MARCHESINI GROUP S.p.A., 40065 Pianoro (Bologna) (IT)
(72) Inventor: Monti, Giuseppe, 40065 Pianoro (Bologna) (IT)
(74) Representative: Dall'Olio, Giancarlo

(57) **Abstract**

A system for transmitting motion between means separated by a partition wall includes power means (3), operating a first magnetic disc (6a), which faces said partition wall (7). A second magnetic disc (6b), situated opposite to the first magnetic disc (6a) and separated therefrom by the partition wall (7), is connected to at least one working member (30) and defines a magnetic coupling with the first magnetic disc (6a), to allow the transmission of the motion from the power means (3) to the working means (30). The second magnetic disc (6b) and working means (30) are situated in a controlled atmosphere environment, defined by a chamber, separated from outside by means, to which the partition wall (7) belongs.

## Description

The present invention relates to transmission of motion between means situated in different areas, with a particular reference to the applications related to the motive power transmission from a first area to a controlled atmosphere environment.

There are different technical fields, which use the transmission of a torque, or of a power, between two different areas, separated by a partition element for various reasons.

There are also many applications, which require carrying the mechanical energy to controlled atmosphere environments, e.g. sterile or subjected to preestablished controlled pressure and temperature values.

The document EP 1.239.572 describes a device for transmitting rotation motion, by magnetic coupling, between mechanically disjoined elements, separated by an empty space.

The document DE 198 26 065 shows a rapid detaching, multiple dispensing head for syringes or laboratory pipettes, with a magnetic coupling between the power means and the head.

The document EP 0.210.557 teaches to produce a front magnetic coupling device, aimed at transmitting a torque from a first to a second environment, which are hermetically separated by a air-tight partition wall; the use of this device is particularly advantageous for medicaments administering.

The object of the present invention is to propose a system for transmitting motion between means separated by a partition wall, which is aimed at transmitting motion, also combined by rotation and horizontal translation motions, in a direction parallel to the wall, between an power means member, situated in a first area, and working means, situated in a controlled atmosphere environment, defined by a chamber insulated from the outside by means, of which the partition wall is an integral part.

Another object of the present invention is to propose a system for transmitting motion between means separated by a partition wall, which is aimed at transmitting motion, also combined by rotation and horizontal translation motions, in a direction parallel to the wall, between an power means member, situated in a first area, and working means, situated in a second area, delimited by the partition wall.

A further object of the present invention is to propose a system for transmitting motion between means separated by a partition wall, so that the motion transmitted from an power means member to relative working means, with the partition wall interposed therebetween, allows a rational and immediate use of the so transferred mechanical energy.

A still further object of the present invention is to propose a system for transmitting motion between means separated by a partition wall, whose concept is simple and whose production costs are relatively contained.

The above mentioned objects are obtained in accordance with the contents of the claims.

The characteristic features of the invention, not resulting from what has just been said, will be better pointed out in the following, in accordance with the contents of claims and with help of the enclosed figures, in which:

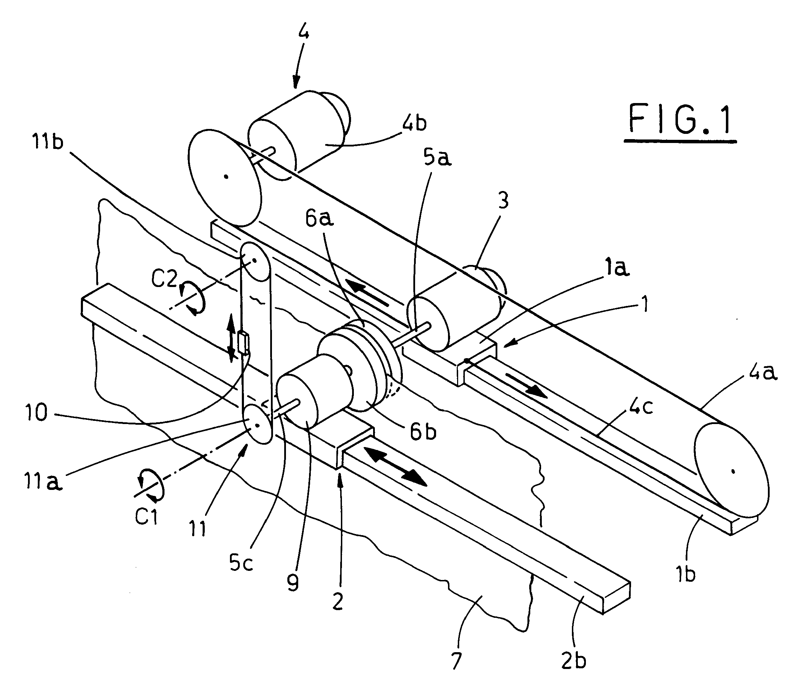

- Figure 1 is a schematic, perspective view of the proposed system;
- Figure 2 is a front, detailed view of a second embodiment;
- Figures 3a, 3b show a particular of Figure 2, according to two possible embodiments;
- Figure 4 is a top view of an element of Figure 3b.

Having regards to the above Figures, the reference numeral 3 indicates an power means, carried by first guiding means 1, for example arranged horizontal , and including a slide 1a, which carries, fastened thereto the power means 3, that can slide on a relative horizontal guide 1b.

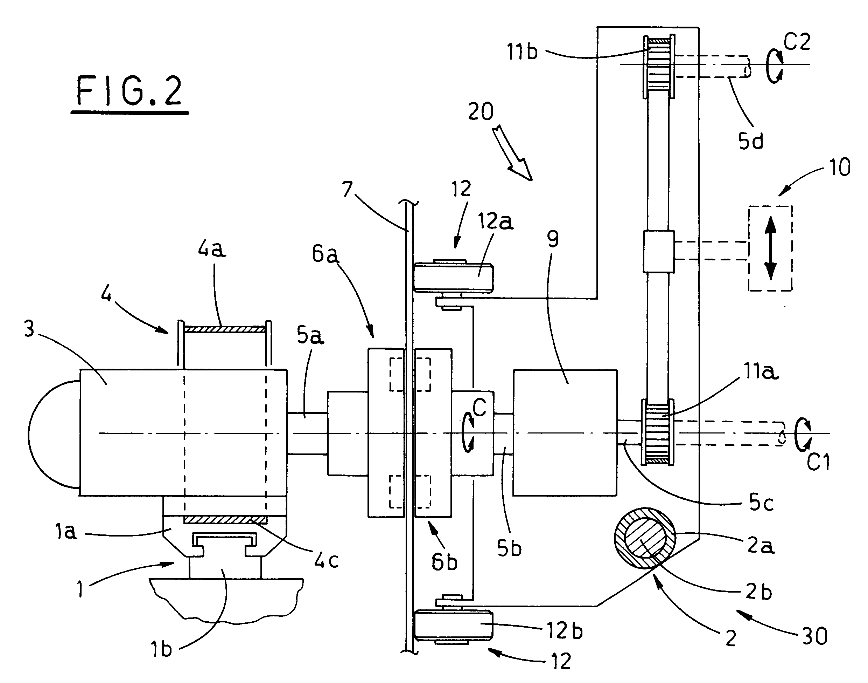

The power means 3 is connected to a unit 4, which is capable of moving the power means along the horizontal guiding means 1: the above mentioned unit 4, see Figure 2, includes e.g. a first endless conveyor 4a, whose lower run 4c is fastened to the slide 1a, by known means. The endless conveyor is operated by a motor group 4b.

The power means 3 rotate a first shaft 5a, carrying, keyed onto its ends, a first magnetic disc 6a, which is magnetically coupled with a second magnetic disc 6b. A partition wall 7, of non magnetic material, which cannot be magnetized, is interposed between the first and second magnetic discs.

The horizontal guide 1a is parallel to the wall 7.

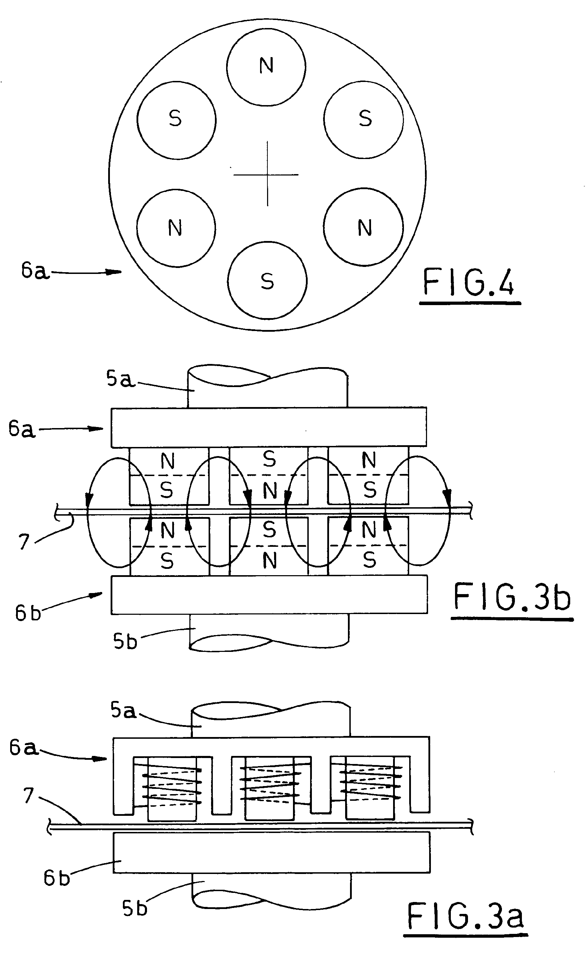

Figures 3a, 3b show two possible embodiments defining the type of magnetic coupling, which can be obtained, respectively, by electromagnets mounted on the first disc 6a, or by permanent magnets fastened to both discs, first disc 6a and second disc 6b.

Figure 4 is a top view of the arrangement of the permanent magnets, according to the variant of the first magnetic disc 6a, shown in Figure 3b.

The second magnetic disc 6b is keyed onto the end of a main shaft 5b, carried by a structure 20, see Figure 2, which will be discussed later on.

The main shaft 5b is coaxial with the first shaft 5a and is connected, by a speed reducer 9, to a second shaft 5c, which supplies a first torque C1.

The second shaft 5c carries, keyed thereon, a first pulley 11a, which belongs to a second endless conveyor 11, aimed at moving a translation unit 10, fastened in known way to one of the conveyor runs, and at supplying a second torque C2 onto a relative second pulley 11b of the conveyor 11.

The second torque C2, depending on the first torque C1 and on the geometrical relations characterizing the conveyor 11, is transmitted to a third shaft 5d, onto which the second pulley 11b is keyed.

The second shaft 5c and third shaft 5d supply corresponding torques C1, C2, which are applied to working means, not shown in the Figures.

The group defined by the second magnetic disc 6b, the main shaft 5b, the speed reducer 9, the second and third shafts 5c, 5d, and by the second conveyor 11, is carried by the structure 20, sliding on second guiding means 2.

In particular, the structure 20 forms a sleeve 2a, which can slide along a stem 2b, arranged with a horizontal axis and being parallel to the partition wall 7 and fastened to a frame, not shown.

The system includes also stabilizing and anti-rotation means 12 of the structure 20, formed by two rolls carried idle by the latter, distributed above and below the second magnetic disc 6b, and aimed at going in abutment against the partition wall 7 with the rolling surfaces.

The first group formed by the power means 3, the first horizontal guiding means 1, the first conveyor 4, the motorized group 4b, the first shaft 5a and the first magnetic disc 6a, shown on the left of the partition wail 7 in Figure 2, is contained in a first area.

The second group formed by the second magnetic disc 6b, the main shaft 5b, the speed reducer 9, the second shaft 5c and third shaft 5d, the second conveyor 11, the translation unit 10, the structure 20, the stabilizing and anti-rotation means 12, the second horizontal guide means 2 and the working means, not shown, connected to the second shaft 5c and third shaft 5d, as shown on the right of Figure 2, are contained in a controlled atmosphere environment, e.g. sterile, defined by a chamber, not shown, separated from the outside by means, to which belongs the partition wall 7.

It is specified that the above mentioned second group, excluding the second magnetic disc 6b, defines working means 30, aimed at using the mechanical energy supplied by the second magnetic disc 6b.

Now the operation of the system proposed by the present invention will be described.

The operation of the power means 3 determines the transmission of a rotating motion from the first shaft 5a to the main shaft 5b due to the magnetic coupling between the first magnetic disc 6a and the second magnetic disc 6b, to which a torque C is transmitted.

The speed reducer 9 reduces the angular speed of the main shaft 5b and at the same time, increases the torque value from a value C to a value C1 on the second shaft 5c, associated to the previous value by known relations.

This allows to use the mechanical energy supplied by the second shaft 5c in various ways, besides the direct connection of first working means, not shown, it is also possible to operate the second conveyor 11; in this case, it is possible to connect second working means, likewise not shown, to the third shaft 5d, onto which the second pulley 11b is keyed, as well as to fasten a translation unit 10 to a run of the second conveyor 11, in order to transmit a linear motion to a moving element, not shown.

The operation of the first conveyor 4 by the motorized group 4b, allows the power means 3 to translate longitudinally along the first horizontal guiding means 1, to which the contextual translation of the structure 20 corresponds, in the same direction .

The structure 20 slides along the stem 2b due to the force transmitted to the second magnetic disc 6b by the magnetic coupling defined therein.

In this way, the first magnetic disc 6a and the second magnetic disc 6b slide along the relative surfaces of the partition wall 7, remaining opposite to each other.

The stabilizing and anti-rotation means 12 keep the translation of the structure 20 parallel to the one of the power means 3, since it excludes any rotation of the structure 20 with respect to the axis of the stem 2b, stabilizing also its motion.

It results obvious from the above considerations that the proposed system can allow to transmit the rotary motion, horizontal translation motion, as well as the combination of the two previous motions between the power means 3 and the working means 30 operated by the second magnetic disc 6b, thus obtaining the objects and being of simple concept and relatively cheap.

Moreover, the proposed system allows a clear physical separation between the first area, where the potentially polluting means work, and the controlled atmosphere environment, e.g. sterile, which requires the "dry" means operation, which consequently do not change its state.

The illustrated example describes two embodiments of the working means 30; it is understood that the rotation-translation of the second shaft 5c can be used in any way, to operate working groups of any conformation and fulfilling specific functions.

For instance, the translation unit 10 can be formed by a nozzles carrying group, made move vertically to introduce and remove the nozzles into and from bottles carried by a conveyor situated below and motorized continuously, with the group being operated horizontally in a back and forth motion (in order to translate horizontally the working means 30) with the forth stroke velocity equal to the conveyor velocity.

The proposed system can be also advantageously used in the applications, in which the partition wall acts only as separation means between the two different areas, the one containing the working means not being controlled atmosphere environment; therefore, the present invention is characterized by a versatility, which allows its introduction in numerous technical applications.

## Claims

1. System for transmitting motion between means separated by a partition wall, **characterized in that** it includes: power means (3), operating a first magnetic disc (6a), which faces said partition wall (7); a second magnetic disc (6b), opposite to said first magnetic disc (6a) and separated therefrom by said partition wall (7), with said second magnetic disc (6b) connected to at least one working member (30) and defining a magnetic coupling with said first magnetic disc (6a) to allow the transmission of the motion from said power means (3) to said working means (30), said second magnetic disc (6b) and working means (30) being situated in a controlled atmosphere environment, defined by a chamber, separated from outside by means, to which said partition wall (7) belongs.

2. System, as claimed in claim 1, **characterized in that** said power means (3) rotates a first shaft (5a), which carries, keyed onto its end, said first magnetic disc (6a), in order to transmit the rotation motion between said power means (3) and working means (30).

3. System, as claimed in claim 1, **characterized in that** said power means (3) is carried by first guiding means (1) and is subjected to a relative unit (4) for moving the power means (3) along said first guiding means (1) and **in that** said working means (30) are carried by a structure (20), which slides on second guiding means (2), in order to allow its relative motion, as a consequence of translation of said power means (3) along the first guiding means (1).

4. System, as claimed in claim 3, **characterized in that** said second guiding means (2) include a sleeve (2a), which is carried by said structure (20), and which couples with a stem (2b) fastened to a frame situated in said chamber, so that said structure (20), carrying said working means (30), slide due to translation of said power means (3) along said first guiding means (1).

5. System, as claimed in claim 4, **characterized in that** said working means (30) has stabilizing and anti-rotation means (12), fastened to said structure (20).

6. System, as claimed in claim 3, **characterized in that** said working means (30) includes at least a second shaft (5c), carried by said structure (20) with possibility of rotation and operated by said second magnetic disc (6b).

7. System, as claimed in claim 3, **characterized in that** said working means (30) include at least one second shaft (5c), operated by said second magnetic disc (6b), and at least one third shaft (5d), connected to the second shaft (5c) by an endless transmission element (11), with said second shaft (5c) and third shaft (5d) carried by said structure (20) with possibility of rotation.

8. System, as claimed in claim 3, **characterized in that** said working means (30) include at least one second shaft (5c), operated by said second magnetic disc (6b), and at least one third shaft (5d), connected to the second shaft (5c) by an endless transmission element (11), and at least one translation unit (10), fastened to one of the runs of said transmission element (11), with said second shaft (5c) and third shaft (5d) carried by said structure (20) with possibility of rotation.

9. System, as claimed in claim 5, **characterized in that** said stabilizing and anti-rotation means (12) include at least two rolls (12a, 12b), carried idle by said structure (20), and going in abutment against the partition wall (7).

10. System for transmitting motion between means separated by a partition wall, **characterized in that** it includes: power means (3), carried by first guiding means (1) and connected to a relative unit (4) for being moved along said first guiding means (1), said power means (3) moving a first magnetic disc (6a), opposite to said partition wall (7); a second magnetic disc (6b), opposite to said first magnetic disc (6a) and separated therefrom by said partition wall (7), with said second magnetic disc (6b) being connected to at least one working member (30), carried by a structure (20), which slides on second guiding means (20), said second magnetic disc (6b) coupling magnetically with said first magnetic disc (6a), so as to transmit the motion from said power means (3) to said working means (30), as well as the translation of the structure (20), which carries the latter due to the motion of said power means (3) along said first guiding means (1).

11. System, as claimed in claim 10, **characterized in that** said power means (3) drives to rotate a first shaft (5a), which carries, keyed onto its end, said first magnetic disc (6a), in order to transmit the rotation motion between said power means (3) and working means (30).

12. System, as claimed in claim 10, **characterized in that** the second guiding means (2) include a sleeve (2a), which is carried by said structure (20), and which couples with a stem (2b) fastened to a frame, so that said structure (20), carrying said working means (30), slide due to the translation of said power means (3) along said first guiding means (1).

13. System, as claimed in claim 12, **characterized in that** said working means (30) has stabilizing and anti-rotation means (12), fastened to said structure (20).

14. System, as claimed in claim 10, **characterized in that** said working means (30) includes at least a second shaft (5c), carried by said structure (20) with possibility of rotation and operated by said second magnetic disc (6b).

15. System, as claimed in claim 10, **characterized in that** said working means (30) include at least one second shaft (5c), operated by said second magnetic disc (6b), and at least one third shaft (5d), connected to the second shaft (5c) by an endless transmission element (11), with said second shaft (5c) and third shaft (5d) carried by said structure (20) with possibility of rotation.

16. System, as claimed in claim 10, **characterized in that** said working means (30) include at least one second shaft (5c), operated by said second magnetic disc (6b), and at least one third shaft (5d), connected to the second shaft (5c) by an endless transmission element (11), and at least one translation unit (10), fastened to one of the runs of said transmission element (11), with said second shaft (5c) and third shaft (5d) carried by said structure (20) with possibility of rotation.

17. System, as claimed in claim 13, **characterized in that** said stabilizing and anti-rotation means (12) include at least two rolls (12a, 12b), carried idle by said structure (20), and going in abutment against the partition wall (7).
